# DEMANDE DE BREVET EUROPEEN

(11) **EP 4 823 057 A1**
(43) Date de publication de la demande: **14.10.2026**
(21) Numéro de dépôt: 26171279.8
(22) Date de dépôt: 08.04.2026
(51) Int. Cl.: H04L 45/50, H04L 45/00, H04L 45/64

(54) **PROCÉDÉ DE ROUTAGE DANS UN ENVIRONNEMENT DE RÉSEAUX PRIVÉS VIRTUELS**

(30) Priorité: 10.04.2025 FR 2503806
(71) Demandeur: Orange, 92130 Issy-les-Moulineaux (FR)
(72) Inventeur: LEMOINE, Benoit, 92326 CHATILLON CEDEX (FR)
(74) Mandataire: Plasseraud IP

(57) **Abrégé**

Procédé de routage dans un environnement de réseaux privés virtuels, le procédé étant mis en œuvre par une entité de routage (106) comprenant une pluralité d'interfaces de sortie associées à un unique réseau local virtuel, le procédé comprenant :
une obtention d'un message comprenant une adresse de destination d'un dispositif distant (102), joignable, depuis une passerelle de routage (100), raccordée à une pluralité de réseaux privés virtuels et ayant une adresse d'acheminement dans le réseau local virtuel, par l'intermédiaire d'un réseau privé virtuel (104) de la pluralité de réseaux privés virtuels, et
un acheminement du message vers une interface de sortie de l'entité de routage, ladite interface de sortie étant adaptée pour un acheminement du message à destination de l'adresse de destination par l'intermédiaire dudit réseau privé virtuel (104) depuis la passerelle de routage.

## Description

### Domaine technique

La présente divulgation relève du domaine des réseaux de télécommunications. Plus particulièrement, elle porte sur des procédés de gestion d'une fonction réseau virtuelle, une entité de routage, un proxy MPLS, et un système de gestion d'une fonction réseau virtuelle.

### Technique antérieure

Dans l'état de la technique, il est connu d'utiliser des proxys MPLS pour relayer des paquets IP entre des clients et une passerelle de datacenter (DCGW), en encapsulant ces paquets avec des labels MPLS associés à des VPNs en fonction de l'interface d'entrée du proxy MPLS. Ces architectures permettent de mutualiser l'infrastructure physique tout en assurant une séparation logique du trafic.

Toutefois, lorsqu'un même client local (par exemple une fonction réseau virtuelle) est connecté à plusieurs VPNs via un proxy MPLS, celui-ci peut répondre à un paquet IP en l'envoyant vers une interface inadéquate du proxy MPLS. Le proxy MPLS encapsule alors le paquet de réponse avec un label correspondant à un VPN incorrect, ce qui empêche son acheminement correct dans la passerelle de datacenter. Cela se traduit typiquement par une perte totale des paquets à destination de certains clients distants puisque les paquets sont acheminés vers une mauvaise destination à la suite du choix incorrect de l'interface du proxy MPLS, et consécutivement du VPN, choisie pour l'envoi des paquets vers la destination. Cette situation peut d'ailleurs se produire pour un paquet émis par le client local indépendamment qu'il ait reçu un paquet précédemment en provenance d'une entité destinatrice, par exemple un client distant associé au client local par la mise en œuvre du VPN.

Il existe ainsi un besoin technique pour un mécanisme surmontant cette limitation.

### Résumé

La présente divulgation vient améliorer la situation.

Selon un aspect, il est proposé un procédé de routage dans un environnement de réseaux privés virtuels, le procédé étant mis en œuvre par une entité de routage comprenant une pluralité d'interfaces de sortie associées à un unique réseau local virtuel, le procédé comprenant :
une obtention d'un message comprenant une adresse de destination d'un dispositif distant, CER2, joignable, depuis une passerelle de routage, DCGW, raccordée à une pluralité de réseaux privés virtuels et ayant une adresse d'acheminement dans le réseau local virtuel, par l'intermédiaire d'un réseau privé virtuel de la pluralité de réseaux privés virtuels, et
un acheminement du message vers une interface de sortie de l'entité de routage, ladite interface de sortie étant adaptée pour un acheminement du message à destination de l'adresse de destination par l'intermédiaire dudit réseau privé virtuel depuis la passerelle de routage.

Cette configuration spécifique permet à l'entité de routage d'émettre des messages à destination d'un dispositif distant (PC, smartphone, capteur...) joignable par l'intermédiaire d'un VPN via une même adresse d'acheminement à travers des chemins logiquement distincts et différenciés selon le VPN cible, bien que physiquement connectés à un même VLAN.

Selon un autre aspect, il est proposé un procédé de routage dans un environnement de réseaux privés virtuels, le procédé étant mis en œuvre par un dispositif proxy comprenant une pluralité d'interfaces d'entrée, le procédé comprenant :
obtenir, via une interface d'entrée de ladite pluralité d'interfaces d'entrée, un message comprenant une adresse de destination d'un dispositif distant, CER2, joignable, depuis une passerelle de routage, DCGW, raccordée à une pluralité de réseaux privés virtuels et ayant une adresse d'acheminement dans le réseau local virtuel, par l'intermédiaire d'un réseau privé virtuel de la pluralité de réseaux privés virtuels, et
acheminer le message et un label spécifique audit réseau privé virtuel vers l'adresse d'acheminement de la passerelle de routage dans le réseau local virtuel.

Selon un autre aspect, il est proposé une entité de routage adaptée pour opérer dans un environnement de réseaux privés virtuels, l'entité de routage comprenant une pluralité d'interfaces de sortie associées à un unique réseau local virtuel, l'entité de routage étant configurée pour :
obtenir un message comprenant une adresse de destination d'un dispositif distant, CER2, joignable, depuis une passerelle de routage, DCGW, raccordée à une pluralité de réseaux privés virtuels et ayant une adresse d'acheminement dans le réseau local virtuel, par l'intermédiaire d'un réseau privé virtuel de la pluralité de réseaux privés virtuels, et
acheminer le message vers une interface de sortie de l'entité de routage, ladite interface de sortie étant adaptée pour un acheminement du message à destination de l'adresse de destination par l'intermédiaire dudit réseau privé virtuel depuis la passerelle de routage.

Selon un autre aspect, il est proposé un dispositif proxy adapté pour opérer dans un environnement de réseaux privés virtuels, le dispositif proxy comprenant une pluralité d'interfaces d'entrée, le dispositif proxy étant configuré pour :
obtenir, via une interface d'entrée de ladite pluralité d'interfaces d'entrée, un message comprenant une adresse de destination d'un dispositif distant, CER2, joignable, depuis une passerelle de routage, DCGW, raccordée à une pluralité de réseaux privés virtuels et ayant une adresse d'acheminement dans le réseau local virtuel, par l'intermédiaire d'un réseau privé virtuel de la pluralité de réseaux privés virtuels, et
acheminer le message et un label spécifique audit réseau privé virtuel vers l'adresse d'acheminement de la passerelle de routage dans le réseau local virtuel.

Selon un autre aspect, il est proposé un système de routage, le système comprenant une entité de routage telle que définie dans les présentes et/ou un dispositif proxy tel que défini dans les présentes.

La technique proposée peut améliorer la fiabilité du routage des messages dans des architectures mutualisées supportant plusieurs VPNs sur une infrastructure physique partagée. Notamment, la technique proposée peut contribuer à un aiguillage correct des messages dans un environnement comprenant plusieurs réseaux privés virtuels raccordés à une même passerelle de routage. Cela peut permettre l'acheminement de chaque message via un chemin compatible avec le réseau privé virtuel auquel appartient la destination, même en l'absence de mécanisme explicite de signalisation dynamique entre les entités participantes.

En particulier, le fait pour une entité de routage d'acheminer un message destiné à un dispositif distant joignable par l'intermédiaire d'un réseau privé virtuel via une interface de sortie adaptée à cet acheminement peut permettre d'éviter les erreurs de routage et d'éliminer les pertes de paquets induites par l'utilisation d'un tunnel VPN inadapté. L'utilisation de plusieurs interfaces de sortie dans un même réseau local virtuel, chacune étant adaptée à un ensemble de destinations associées à un VPN donné, peut permettre d'introduire une forme d'aiguillage implicite tout en s'appuyant sur une configuration de routage classique.

Par ailleurs, le comportement du dispositif proxy ne requiert aucune coordination dynamique avec une autre entité lors de la transmission de chaque message. Il repose sur une configuration par exemple fixe ou préétablie, associant à chaque interface d'entrée du proxy (ou de manière équivalente à chaque interface de sortie d'une entité de routage lorsque ces interfaces de sortie sont chacune raccordée à une interface d'entrée correspondante du dispositif proxy) un label spécifique à un réseau privé virtuel. Une telle configuration permet au proxy de prendre en charge l'acheminement du message sans ambiguïté, ce qui peut contribuer à renforcer la robustesse du système et à simplifier le déploiement d'une infrastructure de communication segmentée par VPNs.

Selon un autre aspect, il est proposé un programme informatique comportant des instructions pour la mise en œuvre de tout ou partie d'un procédé tel que défini dans les présentes, dans l'un quelconque de ses modes de réalisation, lorsque ce programme est exécuté par un processeur. Selon un autre aspect, il est proposé un support d'enregistrement non transitoire, lisible par un ordinateur, sur lequel est enregistré un tel programme.

Les caractéristiques exposées dans la présente demande peuvent, optionnellement, être mises en œuvre, indépendamment les unes des autres ou en combinaison les unes avec les autres.

Dans un exemple, l'interface de sortie est indiquée dans une table de routage accessible à l'entité de routage, comme interface de sortie à utiliser pour une plage d'adresses comprenant l'adresse de destination, au moins une partie de ladite plage d'adresses étant préalablement apprise par l'entité de routage au moyen d'une session de routage établie entre l'entité de routage et un gestionnaire d'une route associée audit réseau privé virtuel.

Le fait que la plage d'adresses IP de destination soit apprise dynamiquement via une session de routage peut offrir une interopérabilité avec les protocoles standards comme BGP, et peut faciliter le déploiement automatisé dans des environnements multi-VPN dynamiques.

Dans un exemple, la session de routage est une session BGP.

Dans un exemple, au moins une partie de la table de routage est stockée localement dans l'entité de routage.

Dans un exemple, au moins une partie de la table de routage est stockée dans un dispositif distant et est interrogée par l'entité de routage avant l'acheminement du message vers ladite interface de sortie.

Dans un exemple, l'adresse d'acheminement dans le réseau local virtuel est commune aux interfaces de sortie de l'entité de routage et correspond à l'adresse d'acheminement de la passerelle de routage, DCGW, dans le réseau local virtuel.

Dans un exemple, ladite interface de sortie de l'entité de routage est raccordée à une interface d'entrée d'un dispositif proxy, le message étant acheminé par le dispositif proxy vers l'adresse d'acheminement de la passerelle de routage, DCGW, dans le réseau local virtuel au moyen d'un label spécifique audit réseau privé virtuel.

Cela peut permettre d'éviter l'utilisation d'un mauvais label, et donc d'éliminer (ou au moins de limiter) le risque de perte de paquets dû à une encapsulation incorrecte.

Dans un exemple, le label est déterminé par le dispositif proxy en tenant compte de l'interface d'entrée du dispositif proxy par lequel le dispositif proxy reçoit le message.

Le couplage entre l'interface d'entrée du dispositif proxy et le label déterminé par le dispositif proxy peut permettre une correspondance implicite entre l'interface de sortie de l'entité de routage et le bon VPN, sans nécessairement requérir de logique additionnelle de suivi au sein de l'entité de routage ou de marquage supplémentaire dans les paquets. Seule la résolution d'adresse de prochain saut doit être assurée par l'entité de routage afin de connaître l'adresse d'acheminement dans le réseau local correspondant à la passerelle de routage DCGW.

### Brève description des dessins

D'autres caractéristiques, détails et avantages apparaîtront à la lecture de la description détaillée ci-après, et à l'analyse des dessins annexés, sur lesquels :
**Fig. 1**

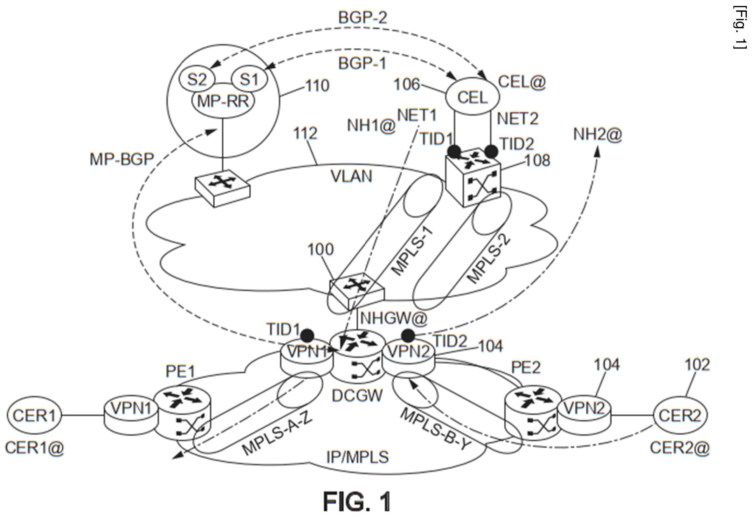

   [Fig. 1] montre un exemple d'architecture logique d'un système de communication mettant en oeuvre un proxy MPLS pour interconnecter un client local avec plusieurs réseaux privés virtuels dans un datacenter dans lequel le client local n'utilise pas la bonne interface en fonction du VPN source du paquet IP reçu, selon l'état de la technique.
**Fig. 2**
   **Fig. 3**

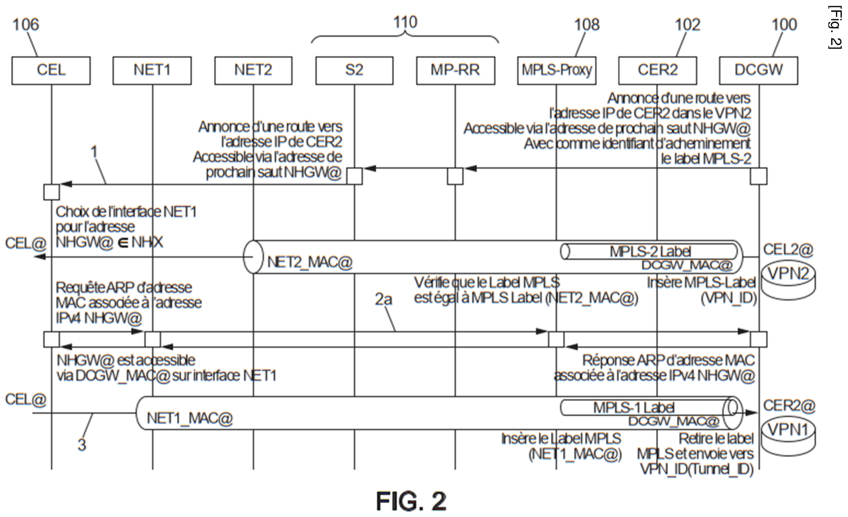

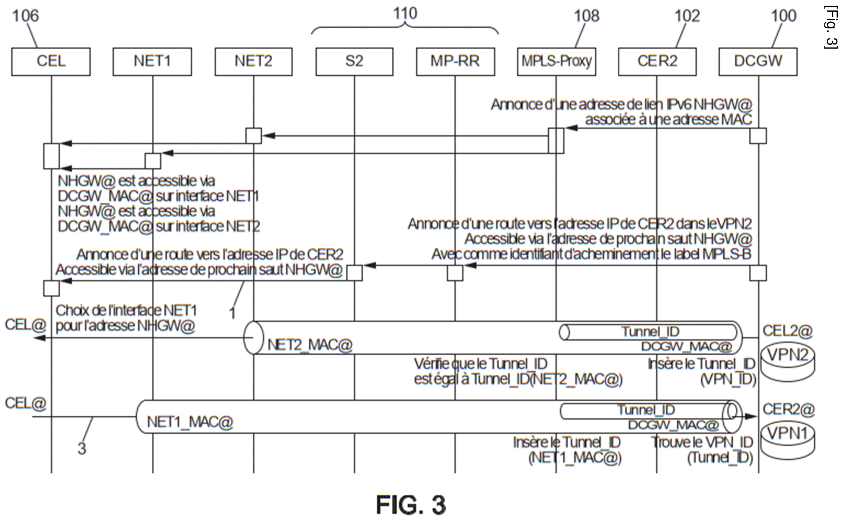

   [Fig. 2] et [Fig. 3] représentent des diagrammes de séquence illustrant un exemple de fonctionnement incorrect, en IPv4 et en IPv6 respectivement, lorsqu'un client local utilise une interface inadéquate pour répondre à un paquet IP reçu via un VPN donné.
**Fig. 4**

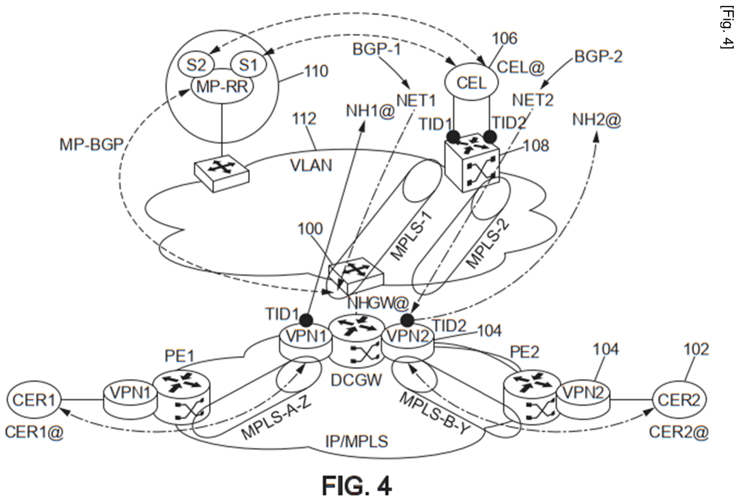

   [Fig. 4] montre une architecture logique d'un système de communication mettant en œuvre un proxy MPLS pour interconnecter un client local avec plusieurs réseaux privés virtuels dans un datacenter, dans lequel le client local utilise la bonne interface en fonction du VPN source du paquet IP reçu, dans un exemple de réalisation.
**Fig. 5**
   **Fig. 6**

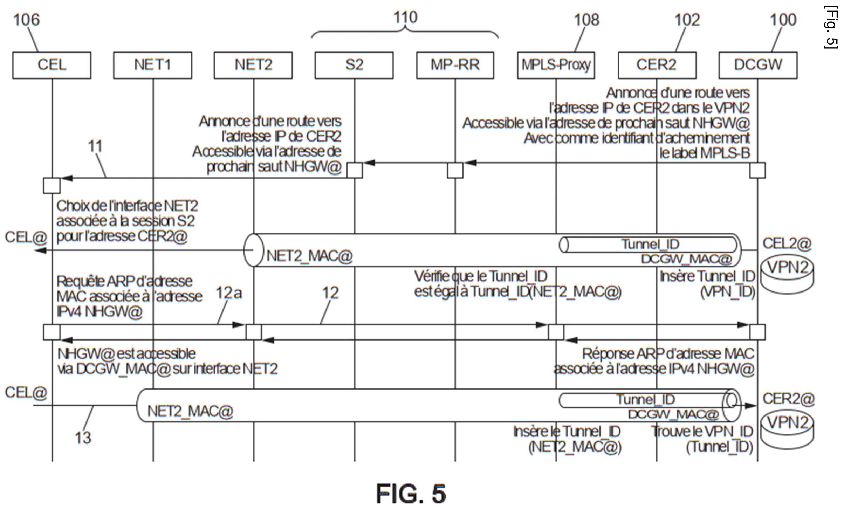

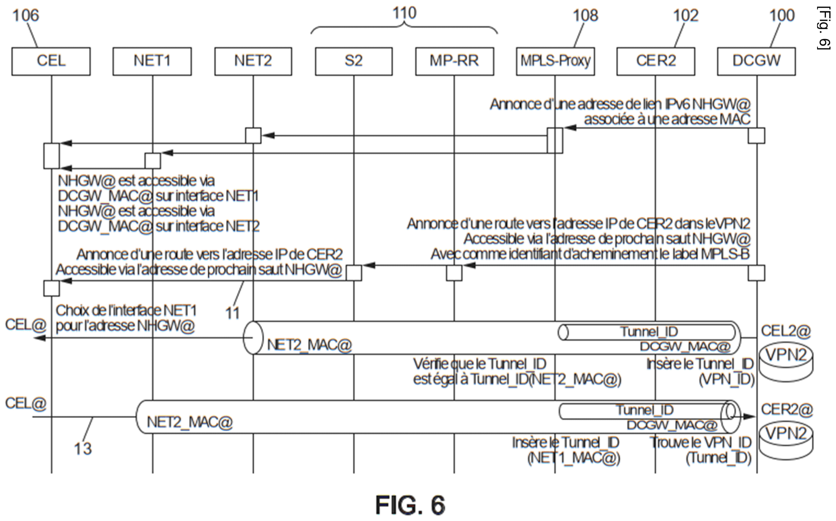

   [Fig. 5] et [Fig. 6] représentent des diagrammes de séquence, en IPv4 et en IPv6 respectivement, illustrant un fonctionnement correct obtenu dans un exemple de réalisation, avec une correspondance entre l'interface utilisée dans le sens montant et le VPN utilisé dans le sens descendant.
**Fig. 7**

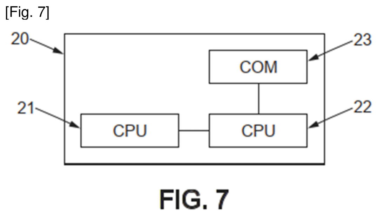

   [Fig. 7] montre une architecture matérielle générique d'un dispositif informatique pouvant être utilisé en tant qu'entité de routage et/ou en tant que proxy MPLS, dans un exemple de réalisation.

### Description des modes de réalisation

La présente divulgation concerne une technique de gestion d'une fonction réseau virtuelle. Un aspect de la technique proposée est mis en œuvre par une entité de routage. Un autre aspect de la technique proposée est mis en œuvre par un proxy MPLS.

Tous moyens matériels et/ou logiciels adaptés peuvent être utilisés pour la mise en œuvre pratique de la fonction réseau virtuelle, de l'entité de routage et du proxy MPLS. De manière générale, bien que des aspects de la technique proposée puissent être décrits dans le présent document comme étant un processus, un dispositif, un système, une procédure ou une méthode, il est à noter que la technique proposée peut également couvrir une mémoire informatique susceptible d'être raccordée à un processeur éventuellement raccordé à une interface de communication, la mémoire stockant des instructions qui, lorsqu'elles sont exécutées par un tel processeur, permettent de réaliser ce processus, ce dispositif, ce système, cette procédure ou cette méthode.

Quelques termes techniques propres au domaine des réseaux informatiques et des télécommunications, sont utilisés dans le présent document, le cas échéant en anglais, et/ou sous forme d'acronymes. Les définitions et explications techniques afférentes à ces termes sont à présent fournies pour faciliter la compréhension de la technique proposée.

Internet Protocol (IP) est un protocole de communication pour le transfert de datagrammes sur un réseau.

Un paquet IP est une unité de données transmise sur un réseau utilisant le protocole Internet IP. Un paquet IP contient plusieurs champs, notamment un en-tête qui inclut des informations essentielles au routage (comme les adresses source et destination), ainsi qu'une charge utile contenant les données à transmettre.

Une adresse IP est un identifiant unique attribué à un dispositif connecté à un réseau utilisant le protocole IP. Elle permet d'acheminer les paquets IP vers le bon destinataire. Une adresse IP peut être de type IPv4 (par exemple, 192.168.1.1) ou IPv6 (par exemple, 2001 :db8::1).

Une adresse IP source est l'adresse IP d'un dispositif (ou d'une entité) ayant émis un paquet IP, tandis qu'une adresse IP de destination est l'adresse IP d'un dispositif (ou d'une entité) destinés à recevoir ce paquet IP.

Un préfixe IP est une expression d'une plage d'adresses IP, généralement représentée par une adresse IP suivie d'un masque de sous-réseau (comme 192.168.0.0/24). Elle dénote un ensemble d'adresses IP qui partagent les mêmes bits initiaux.

Une route est une information utilisée par un dispositif pour acheminer des paquets IP vers leur destination. Une route est généralement définie par une association entre un préfixe IP et une interface réseau permettant d'atteindre ce préfixe. Dans certains cas, une route peut inclure des attributs supplémentaires influençant l'acheminement du trafic, tels que des priorités, des préférences de cheminement ou des informations sur la latence. Ces attributs sont notamment utilisés dans les protocoles de routage dynamique comme BGP pour optimiser la gestion des routes et adapter l'acheminement en fonction de la topologie du réseau. Une route peut être statiquement configurée par un administrateur réseau ou dynamiquement apprise par un protocole de routage tel que BGP (Border Gateway Protocol). Lorsqu'une route est dynamique, elle peut être mise à jour en fonction de la topologie du réseau et des annonces de routage reçues.

L'acheminement d'un paquet IP selon une route se fait généralement selon le principe du prochain saut (next-hop). Un prochain saut est une adresse IP correspondant au premier dispositif réseau vers lequel un paquet doit être envoyé pour atteindre sa destination finale. Plutôt que d'envoyer un paquet directement à son adresse IP de destination, une entité de routage consulte ses routes et transmet le paquet vers le prochain saut indiqué pour cette destination.

Pour assurer cet acheminement, une entité de routage est utilisée. Une entité de routage est un dispositif ou une fonction logicielle chargée de sélectionner l'interface de sortie appropriée de l'entité de routage pour transmettre un paquet IP en fonction d'une table de routage. Une entité de routage peut être un routeur, un commutateur, une fonction logicielle intégrée à une machine virtuelle, voire un terminal notamment mobile assurant une fonction de routage pour un ou plusieurs terminaux qui lui sont connectés, etc...

Une table de routage est une structure de données utilisée par une entité de routage pour associer des plages d'adresses IP de destination à des interfaces réseau et, éventuellement, à des adresses de prochain saut. Une table de routage comprend plusieurs entrées, chacune indiquant un préfixe IP et l'interface réseau à utiliser pour atteindre ce préfixe. Certaines entrées peuvent également spécifier un prochain saut, lorsque la destination n'est pas directement accessible.

Border Gateway Protocol (BGP) est un protocole de routage utilisé pour échanger des informations de routage et de portée entre les systèmes autonomes (AS) sur Internet ou entre sous-réseaux distincts d'une même infrastructure. Il est conçu pour gérer des routes complexes et supporter un grand nombre de préfixes de réseau. BGP est souvent utilisé pour le routage inter-domaine, permettant ainsi la communication entre différents réseaux indépendants.

Une entité de routage dispose d'au moins une interface d'entrée et une interface de sortie. Une interface d'entrée d'une entité de routage est une interface par laquelle l'entité reçoit des paquets IP provenant d'autres dispositifs ou d'autres réseaux. Une interface de sortie d'une entité de routage est une interface par laquelle l'entité transmet des paquets IP vers un prochain saut ou vers une destination finale. Cette interface est sélectionnée en fonction des informations contenues dans la table de routage.

Un datacenter, ou centre de données, est une infrastructure regroupant des ressources informatiques, notamment des serveurs, du stockage et des équipements de réseau, permettant d'héberger et de traiter des services numériques. Les équipements de réseau incluent des commutateurs raccordés aux serveurs. Les commutateurs peuvent être des commutateurs Ethernet ou des routeurs IP émulant un commutateur Ethernet en encapsulant les trames Ethernet dans des tunnels sur IP, par exemples des tunnels VxLAN. Un datacenter peut être interconnecté à d'autres réseaux par l'intermédiaire d'une ou plusieurs passerelles de routage.

Une passerelle de routage d'un datacenter est un dispositif réseau assurant l'interconnexion entre les commutateurs et un ou plusieurs réseaux auxquels le datacenter est rattaché. Elle peut assurer notamment la gestion des échanges entre un ou plusieurs réseaux locaux virtuels internes au datacenter et/ou un ou plusieurs réseaux privés virtuels interconnectant le datacenter à des sites distants.

Dans ce contexte, un réseau local virtuel (VLAN) est un segment logique d'un réseau physique, permettant d'isoler des groupes de dispositifs au sein d'un datacenter. Un VLAN peut être utilisé pour séparer différents types de trafic tout en partageant la même infrastructure physique.

Un réseau privé virtuel (VPN) est un réseau logique permettant de connecter des entités distantes de manière sécurisée en utilisant un réseau sous-jacent (par exemple un réseau public tel qu'Internet). Les flux IP d'un réseau privé virtuel sont isolés de ceux d'autres réseaux privés virtuels ou encore du réseau sous-jacent, pour interdire toute communication avec ces autres réseaux. Différentes techniques d'isolation existent, mais dans les réseaux IP/MPLS, le paquet IP est encapsulé dans une trame MPLS contenant un label MPLS prévu à cet effet.

Une interface d'entrée d'une passerelle de routage est une interface par laquelle la passerelle reçoit des paquets IP entrants en provenance d'un réseau source (par exemple un VLAN interne ou un VPN). Une interface d'entrée est une abstraction logique associée à une entité logicielle de la passerelle de routage. Deux interfaces d'entrée peuvent partager la même interface physique mais être traitées différemment par le plan de données, par exemple selon le label MPLS reçu, ou le VLAN.

Une interface de sortie d'une passerelle de routage est une interface par laquelle la passerelle émet des paquets IP vers un réseau de destination (par exemple un VLAN interne ou un VPN), en fonction des routes configurées.

Une fonction réseau virtuelle, ou Virtual Network Function (VNF), désigne une fonction réseau implémentée sous forme de logiciel sur des serveurs informatiques dits standard, pouvant résider dans des machines virtuelles (VM) ou dans des Containers. Un Container ou conteneur ou encore conteneur d'applications en français est une unité logicielle qui comprend un code d'une application et toutes ses dépendances afin que l'application s'exécute rapidement et de manière fiable d'un environnement informatique à un autre. Un ou plusieurs Containers peuvent être regroupés dans une entité appelée Pod, et qui dispose d'une unique entité de routage mise à disposition du ou des Container.

MultiProtocol Label Switching (MPLS) est une technologie de réseau qui oriente des données d'un nœud à un autre en s'appuyant sur des étiquettes courtes plutôt que de longues adresses réseau. Cette technologie est souvent utilisée pour créer des tunnels sur des réseaux Ethernet.

Un proxy MPLS est un dispositif intermédiaire dans un réseau MPLS qui agit au nom d'autres dispositifs ou clients. Ce rôle peut inclure la gestion des identifiants ou labels MPLS, la facilitation de la communication entre différents segments du réseau, et l'acheminement des données. En fonctionnant comme un proxy, il peut simplifier les configurations de réseau, gérer la distribution des labels et assurer une communication efficace entre des réseaux ou des dispositifs qui ne peuvent pas directement interagir en raison de contraintes de compatibilité ou de configuration. En effet, contrairement à un équipement de type Provider Edge (PE), un proxy MPLS relaie des paquets IP encapsulés dans des trames Ethernet sans changer ni les adresses MAC source ni les adresses MAC destination. Le proxy MPLS se contente d'insérer un en-tête MPLS entre la trame Ethernet et le paquet IP, ce qui implique néanmoins une modification des champs Ethertype (IPv4 ou IPv6, vs. MPLS) et CRC (pour le Contrôle de Redondance Cyclique) de la trame Ethernet.

Dans un exemple de scénario, lorsqu'un paquet IP dont l'adresse de destination est celle d'un client d'un VPN cible est émis par une entité de routage vers une interface d'entrée d'un proxy MPLS, le proxy MPLS peut être configuré pour appliquer un label MPLS correspondant au VPN cible, en vue d'acheminer le paquet IP avec le label MPLS appliqué vers la passerelle de routage pour qu'elle oriente le paquet IP vers le bon réseau privé virtuel (VPN) en fonction du label MPLS appliqué. Dans ce cas de figure, il existe donc une correspondance entre le label MPLS appliqué et le VPN cible.

Dans un tel scénario, l'interface d'entrée du proxy MPLS est un port par lequel le proxy MPLS reçoit le paquet IP de l'entité de routage et l'interface de sortie du proxy MPLS est un port par lequel le proxy MPLS transmet le paquet IP et le label MPLS vers une passerelle de routage DCGW. Sur l'une et l'autre de ces interfaces, le paquet IP (interface d'entrée) ou le paquet IP et la trame MPLS comprenant le label MPLS (interface de sortie) sont encapsulés dans une trame Ethernet contenant la même adresse Ethernet de destination, correspondant à l'adresse d'acheminement de la passerelle DCGW dans le réseau privé local. Cette adresse d'acheminement étant apprise par l'entité de routage par résolution (avec le protocole ARP ou le protocole ICMPv6) de l'adresse IP de prochain saut (next-hop) en adresse Ethernet de la passerelle de routage DCGW.

Customer Edge (CE) désigne un dispositif client (ou une entité cliente) d'un VPN. Dans le contexte du présent document, un CE est par exemple implémenté sous forme d'un Pod ou d'une machine virtuelle (VM). En se plaçant au niveau d'un datacenter, on peut distinguer deux types de CE : un CE dit « local » (CEL, Customer Edge Local) est situé à l'intérieur d'un VLAN du datacenter tandis qu'un CE dit « distant » (CER, Customer Edge Remote) est situé en dehors du datacenter, et est par exemple joignable via un VPN passant par une passerelle de routage du datacenter.

Provider Edge (PE) désigne un routeur IP/MPLS qui connecte des clients (CE distants) ou d'autres PE à des VPNs.

L'un des objectifs de la technique proposée est de permettre à un client BGP, tel qu'un client CEL situé dans un datacenter, d'être raccordé à plusieurs réseaux privés virtuels (VPN) différents, via un ou plusieurs proxys MPLS connectés à une même passerelle de routage (DCGW) à travers un réseau local virtuel (VLAN) commun et consécutivement de permettre au client CEL de pouvoir joindre de façon déterminée et sans erreur de routage des dispositifs distants associés aux différents VPNs auquel est raccordé le client CEL.

Afin d'expliquer cet objectif et une contribution apportée par la présente technique, il est à présent fait référence à deux documents de l'état de la technique :
la demande de brevet français ayant pour numéro de publication FR3118372A1, ci-après [Ref1], qui décrit un fonctionnement d'un proxy MPLS, et
la demande de brevet français ayant pour numéro de dépôt FR2314459, ci-après [Ref2], qui décrit un mécanisme de coordination d'identifiants d'acheminement symétriques.

La figure 1 illustre un exemple possible de topologie d'un exemple de système de communication complexe pour la gestion de réseaux privés virtuels dans un contexte de centre de données. Ce système de communication met en œuvre un proxy MPLS tel que décrit dans [Ref1] et un plan de commande BGP tel que décrit dans [Ref2].

Le système de communication comprend plusieurs entités, notamment :
une passerelle de routage de datacenter DCGW 100
des clients CER1, CER2 102 (distants) et CEL 106 (local),
des réseaux VPN distincts (VPN1, VPN2 104),
un proxy MPLS 108 utilisé pour l'accès au datacenter,
un routeur d'accès PE2 connectant CER2 au réseau VPN2.

La passerelle de routage DCGW 100 d'un centre de données interconnecte le cœur IP/MPLS du réseau et l'environnement VLAN 112 du centre de données. Elle est en mesure d'acheminer des paquets IP entre des clients locaux (par exemple CEL 106) et distants (par exemple CER1 et CER2 102) via différents VPNs, ici identifiés par les VPN1 et VPN2 104.

La topologie peut inclure un nombre quelconque de dispositifs clients (c'est-à-dire ne pas être nécessairement limitée aux clients CEL, CER1, CER2) et un nombre quelconque de réseaux privés virtuels (c'est-à-dire ne pas être limitée aux réseaux privés virtuels VPN1, VPN2).

Dans la topologie représentée, CEL et CER2 sont connectés à la passerelle de routage DCGW 100 via un réseau privé virtuel désigné VPN2 104, ce qui implique une isolation de leur communication, et du flux de données associé à cette communication parmi l'ensemble des flux transitant au sein du réseau IP/MPLS, dans le cadre d'un centre de données partagé. De manière similaire, CEL et CER1 sont connectés à la passerelle de routage DCGW 100 via un réseau privé virtuel désigné VPN1.

Un Proxy MPLS 108 sert de dispositif mandataire, ou dispositif proxy, représentant le client CEL au sein de VPN2 (et au sein de VPN1). Le principe général de fonctionnement de l'entité de routage et du dispositif proxy tel que décrit dans les présentes est indépendant de la nature des labels utilisés, aussi le proxy MPLS peut être remplacé par tout autre type de dispositif proxy représentant le client CEL au sein d'un ou plusieurs des VPNs en présence. Un Provider Edge PE2 est le point de raccordement du client CER2 à VPN2, et un Provider Edge PE1 est le point de raccordement du client CER1 à VPN1.

La passerelle de routage DCGW 100 est représentée comme comprenant un commutateur Ethernet lié au VLAN et un routeur IP/MPLS lié à VPN1 et VPN2.

La passerelle de routage DCGW est configurée pour annoncer des routes vers CEL, CER1 et CER2 en utilisant des identifiants d'acheminement spécifiques sous forme d'identifiants, c'est-à-dire des labels MPLS MPLS-1, MPLS-2, MPLS-A-Z, MPLS-B-Y.

La topologie inclut en outre un dispositif de routage, tel qu'un réflecteur de routes MP-RR 110, qui joue le rôle d'intermédiaire dans la gestion des routes BGP (Border Gateway Protocol) au sein du réseau. MP-RR 110 interagit avec la passerelle de routage DCGW pour établir des sessions de commande et annoncer des routes vers les dispositifs clients. MP-RR 110 est également possiblement impliqué dans l'orchestration des conteneurs d'applications via Kubernetes, indiquant une intégration avec des services d'orchestration modernes pour la gestion des applications dans les conteneurs. Dans l'exemple de réalisation de la figure 1, MP-RR 110 est représenté comme ayant deux services (S1, S2) associés à CEL.

L'infrastructure qui comprend le réflecteur de routes MP-RR 110 est conçue pour intégrer une entité logicielle d'orchestration de conteneurs, telle qu'un système VIM ou système Kubernetes. Cette entité, qui n'est pas explicitement représentée sur la figure 1, est responsable de la gestion du déploiement, de l'orchestration et de l'opérationnalisation des conteneurs d'applications au sein d'un réseau virtuel local VLAN 112. Elle permet que les tunnels bidirectionnels mis en œuvre dans l'environnement VLAN, et contribuant aux VPNs, bénéficient de labels identiques dans les deux directions du tunnel en transmettant le label à utiliser (MPLS-2) au proxy MPLS et à la passerelle, possiblement via le MPLS-RR 110. Elle permet en outre d'automatiser le processus de configuration réseau en assurant que les dispositifs clients tels que CEL sont capables de communiquer efficacement au travers de sessions de commande BGP établies et que les routes nécessaires sont annoncées et maintenues à jour.

La figure 1 illustre un mode de réalisation particulier, avec la présence de tunnels qui facilitent le transport des données entre les dispositifs clients. Les adresses IP de prochain saut et les labels MPLS sont utilisés pour l'identification et l'acheminement des paquets à travers le réseau. Le tunnel entre DCGW et le proxy MPLS est dit « symétrique » en ce qu'il utilise un même identifiant d'acheminement MPLS-2 dans les deux directions. Le tunnel entre DCGW et PE2 est dit « asymétrique » en ce qu'il utilise un identifiant d'acheminement MPLS-B dans une direction et un autre identifiant d'acheminement MPLS-Y dans la direction opposée. Ces deux tunnels contribuent à un chemin de communication entre CEL et CER2.

La passerelle de routage DCGW 100 et le proxy MPLS 108 sont tous deux représentés avec une interface TID1 avec le tunnel MPLS-1 et une interface TID2 avec le tunnel MPLS-2.

Dans le scénario de la figure 1, le client CEL est connecté simultanément à VPN1 et VPN2 via deux interfaces distinctes : NET1 via TID1 (pour VPN1) et NET2 via TID2 (pour VPN2). Cela reflète un cas courant de fonction réseau virtuelle de transit, connectée à plusieurs VPNs à la fois via un unique proxy MPLS. Comme indiqué ci-avant, un nombre plus important de VPNs et d'interfaces associées peuvent être accessibles au client CEL.

Un problème illustré ici est que, lorsqu'un paquet IP envoyé depuis CER2 (via VPN2) est reçu sur NET2 de CEL, ce dernier peut, en l'absence de configuration adaptée, répondre à travers NET1, donc via VPN1, ce qui aboutit à ce que le paquet initialement destiné au client CER2 soit transmis à destination du client CER1, ce qui correspond à une perte de paquet pour la communication entre les clients CEL et CER2 via le VPN2.

En effet, la figure 1 illustre une situation dans laquelle plusieurs VPNs partagent un même VLAN et une même interface de passerelle (DCGW). Cette configuration présente un risque de confusion lors du choix de l'interface de sortie du client CEL, indépendamment que le client CER2 ait préalablement émis un paquet à destination du client CEL via le VPN2, en raison du comportement des protocoles de résolution d'adresse tels que ARP (Address Resolution Protocol IETF RFC 826, pour IPv4) et ND (Neighbor Discovery IETF RFC 4861, pour IPv6).

Les figures 2 pour IPv4 et 3 pour IPv6 décrivent deux scénarios dans lesquels le client CEL risque de sélectionner la mauvaise interface (TID1 pour NET1 au lieu TID2 pour NET2) pour transmettre un paquet au client CER2 via VPN2.

Afin que le client CEL puisse répondre à un paquet IP reçu en provenance de CER2 à travers VPN2, le client CEL doit avoir reçu au préalable une annonce 1 BGP descendante de route (adresse de prochain saut NHGW@ pour Next Hop GateWay Address) permettant d'atteindre l'adresse CER2@ de CER2.

Par un mécanisme décrit dans [Ref2], cette annonce 1 de route peut être obtenue au travers d'une session BGP établie entre le client CEL et un service S2 associé à VPN2 et pris en charge par un élément du réflecteur de routes MP-RR (pour Multi Protocol Route Reflector) éventuellement décomposé en deux étages (l'un, primaire, faisant face à la passerelle de routage DCGW et l'autre, secondaire, gérant directement les services S1 pour VPN1 et S2 pour VPN2 faisant face au client CEL). Par un mécanisme décrit dans [Ref1], l'annonce 1 de route peut être déduite d'une annonce multi-protocole descendante de route (adresse de prochain saut NHGW@ + identifiant d'acheminement ou label MPLS 2) pour atteindre l'adresse du client CER@2 de CER2 à travers VPN2. Comme le client CEL ne gère pas l'ajout du label MPLS au paquet IP (c'est le proxy MPLS qui le fait à sa place), l'annonce 1 de route ne comprend pas de label MPLS.

Les services S1 et S2 désignent les adresses IP du réflecteur de routes vers lesquelles le client CEL établit des sessions BGP. Du point de vue du client CEL, l'adresse vers laquelle établir une session BGP est la façon privilégiée de déterminer à quel VPN correspondent les annonces de route reçues du réflecteur de routes MP-RR. Le terme « service » provient de l'objet Kubernetes qui peut être utilisé pour faire du partage de charge entre plusieurs instances de réflecteur de routes pour des raisons de redondance. Par exemple dans une architecture à deux étages, les éléments de l'étage secondaire peuvent être dupliqués (deux Pods pour le VPN1 en partage de charge grâce au service S1 et deux Pods pour le VPN2 en partage de charge grâce au service S2).

L'identifiant d'acheminement ou label MPLS inséré par DCGW peut être obtenu par une annonce BGP montante préalable et non représentée, du client CEL vers le service S2, relayée par le réflecteur de routes MP-RR en annonce multi-protocole montante de route, après que son étage secondaire l'ait enrichi avec comme identifiant d'acheminement le label MPLS 2.

D'après un mécanisme décrit dans [Ref2], l'identifiant d'acheminement ou label MPLS 2 indiqué dans l'annonce multi-protocole descendante de route est directement recopié par la passerelle de routage DCGW de l'annonce multi-protocole montante de route envoyée par le réflecteur de routes MP-RR.

D'après un mécanisme décrit dans [Ref1], le paquet IP issu, à travers VPN2, de CER2 est inséré dans un tunnel MPLS par l'ajout d'un en-tête MPLS contenant le label MPLS 2 puis inséré dans une trame Ethernet contenant éventuellement un identifiant de VLAN et avec comme adresse MAC source l'adresse de DCGW et comme adresse MAC destination l'adresse NET2_MAC@ de l'interface NET2 de CEL.

L'adresse NET2_MAC@ peut avoir été apprise au préalable par la passerelle de routage DCGW dans une étape non représentée sur les figures 2 et 3 d'après un mécanisme décrit dans [Ref1], où le proxy MPLS relaie les messages ARP et ND entre le client CEL et la passerelle de routage DCGW. Cette étape permet à un ou plusieurs commutateurs Ethernet situés entre CEL et DCGW d'apprendre que le chemin entre ces deux éléments passe par le proxy MPLS auquel le client CEL est directement raccordé.

D'après un mécanisme décrit dans [Ref1], le proxy MPLS vérifie que le label MPLS contenu dans l'en-tête MPLS est conforme à celui attendu pour l'adresse MAC de destination NET2_MAC@, retire l'en-tête MPLS entre le paquet IP et l'encapsulation Ethernet en mettant à jour l'Ethertype et le CRC de la trame Ethernet et envoie la trame Ethernet contenant toujours le paquet IP à destination de l'interface NET2 de CEL.

Avant de pouvoir envoyer un nouveau paquet IP 3 à CER2, le client CEL doit s'assurer de connaître l'adresse MAC de DCGW et sur quelle interface NET1 ou NET2 envoyer le paquet IP.

Dans le cas où l'adresse de prochain saut NHGW@ est une adresse IPv4, elle doit appartenir au même sous-réseau IP NH/X que les adresses NH1@ et NH2@ des interfaces NET1 et NET2 du CE local CE1 pour que le protocole ARP soit utilisé. Toutefois, comme NET1 et NET2 sont rattachés au même sous-réseau IP NH/X, CEL doit choisir l'une ou l'autre des interfaces NET1 ou NET2 comme interface permettant de s'interfacer avec le sous-réseau NH/X. Si CEL choisit l'interface NET1, comme cela est possible selon l'état de la technique, alors cette interface NET1 est utilisée pour envoyer la requête ARP 2a destinée à être relayée par le proxy MPLS vers la DCGW, mais également pour envoyer le paquet IP 3 destiné à être encapsulé dans une trame MPLS par le proxy MPLS.

Dans le cas où l'adresse de prochain saut NHGW@ est une adresse de lien local (LLA pour Link Local Address) IPv6, il n'est pas nécessaire de définir de préfixe IPv6 issu d'une GUA (Global Unicast Address) et d'un masque de sous-réseau en guise de sous réseau : le protocole ND doit simplement être activé de manière indépendante sur les interfaces NET1 et NET2. Dans le cadre d'une procédure DAD (Duplicated Address Detection), DCGW envoie périodiquement à destination de l'adresse multicast Solicited-Nodes-Multicast construite sur la base de l'adresse LLA NHGW@ des messages ND pour vérifier qu'aucun autre hôte IP sur le même VLAN ou LAN auquel elle est raccordée n'utilise la même adresse LLA NHGW@. Le proxy MPLS relayant au même titre que les messages ARP broadcast les messages ND multicast et les deux interfaces NET1 et NET2 étant raccordés au même VLAN ou LAN, elles reçoivent les messages ND en provenance de DCGW et apprennent la joignabilité de l'adresse LLA NHGW@ et de l'adresse MAC associée. Le client CEL doit alors choisir l'une ou l'autre des interfaces NET1 ou NET2 comme interface permettant de discuter avec l'adresse LLA NHGW@. Si le client CEL choisit l'interface NET1, comme cela est possible selon l'état de la technique, alors cette interface NET1 est utilisée pour envoyer le paquet IP 3 destiné à être encapsulé dans une trame MPLS par le proxy MPLS.

Dans les deux cas de figure IPv4 et IPv6, si CEL choisit l'interface NET1 pour envoyer le paquet IP 3 à destination de l'adresse CER2@, alors le paquet IP est encapsulé dans une trame Ethernet contenant comme adresse MAC source l'adresse NET1_MAC@ et est envoyé vers l'interface d'entrée TID1 du proxy MPLS. D'après [Ref1], le proxy MPLS insère ensuite un en-tête MPLS contenant le label MPLS-1 associé au VPN1 lui-même associé à l'interface TID1 de CE1. Finalement, à réception, par DCGW, de la trame Ethernet en provenance du proxy MPLS et après décapsulation, par DCGW, de la trame MPLS comprenant le label MPLS-1, la passerelle de routage DCGW envoie alors à tort le paquet IP à destination de VPN1 vers le client CER1 alors que CER2 n'est joignable qu'à travers VPN2.

Par conséquent, dans les deux cas (IPv4 / IPv6), si le client CEL choisit NET1 au lieu de NET2, le paquet IP destiné au client CER2 est mal aiguillé ou routé, car il est encapsulé avec le label MPLS-1 de VPN1, puis dirigé par DCGW vers VPN1, ce qui aboutit à une perte de paquet pour la communication entre les clients CEL et CER2, car CER2 n'est accessible que via VPN2.

Afin d'illustrer plus concrètement le problème posé et les conditions de mise en œuvre de la présente technique, plusieurs exemples de configuration sont présentés. Ces exemples s'appuient sur l'utilisation, par le client CEL, d'un client BGP open source tel que Free Range Routing (FRR).

Le tableau 1 présente un extrait de configuration dans lequel :
une interface de loopback est définie avec une adresse notée CEL@,
deux adresses IP, NH1@ et NH2@, sont respectivement allouées aux interfaces NET1 et NET2 de CEL.

Ces deux adresses appartiennent à un même sous-réseau IPv4 NH/X, auquel est également connectée la passerelle DCGW.

| |
|---|
| ``` interface lo ip address CEL@/32 exit ! interface net1 ip address NH1@/X exit ! interface net2 ip address NH2@/X exit ! ``` |

Tableau 1 - Exemple possible de configuration des interfaces réseau de CEL

Le tableau 2 présente un extrait de configuration BGP du client CEL en tant que membre d'un système autonome 65001. Deux sessions BGP sont établies avec les services S1 et S2, chacun étant accessible via une interface distincte (NET1 ou NET2). CEL, en tant que client, n'a pas de connaissance explicite des VPN : il échange uniquement des routes IPv4 unicast, sans notion de VPN. La gestion des VPN (VPN1, VPN2) est assurée par le réflecteur de routes MP-RR, au travers des services S1 et S2.

| |
|---|
| ``` router bgp 65001 bgp router-id CEL@ neighbor net1 peer-group neighbor net2 peer-group neighbor S1@ peer-group net1 neighbor S2@ peer-group net2 ! address-family ipv4 unicast neighbor net1 activate neighbor net1 route-map BGP _IMPORT-net1 in neighbor net1 route-map BGP_EXPORT-net1 out neighbor net2 activate neighbor net2 route-map BGP_IMPORT-net2 in neighbor net2 route-map BGP_EXPORT-net2 out exit-address-family exit ! ``` |

Tableau 2 - Exemple possible de configuration BGP de CEL

Le tableau 3 présente un extrait de configuration du client CEL représentant des filtres de routes appliqués pour les échanges avec S1 et S2. Seule l'adresse de loopback CEL@ est exportée vers les services S1 et S2. Dans le cas de fonctions réseau telles que des passerelles de réseau cellulaire mobile (GGSN (en anglais General Packet Radio Services Support Node), PGW (en anglais Packet data network GateWay) ou UPF (en anglais User Plane Function) ou passerelles équivalentes), les sous-réseaux contenant les adresses des terminaux mobiles peuvent être annoncés de cette manière par le client CEL. Les adresses NH1@ et NH2@ ne sont pas exportées en tant que destinations, mais sont utilisées comme adresses de prochain saut (next-hop) respectivement sur NET1 et NET2.

Dans l'extrait fourni dans le tableau 3, les règles de filtrage pour importer des routes en provenance des services S1 et S2 ne comportent que la vérification de l'utilisation du protocole BGP comme source des routes.

| |
|---|
| ``` route-map BGP_EXPORT-net1 permit 1 match interface lo set ip next-hop NH1@ exit ! route-map BGP_IMPORT-net1 permit 1 match source-protocol bgp exit ! route-map BGP_EXPORT-net2 permit 1 match interface lo set ip next-hop NH2@ exit ! route-map BGP_IMPORT-net2 permit 1 match source-protocol bgp exit ! ``` |

Tableau 3 - Exemple possible de filtres d'import/export de routes

Le tableau 4 illustre le contenu effectif de la table de routage de CEL et les résultats d'une commande ICMP (en anglais Internet Control Message Protocol) ping lancée depuis l'interface de loopback CEL@ du client CEL vers deux clients distants, CER1@ et CER2@.

On y observe que les deux routes vers CER1@ et CER2@ passent par le même prochain saut NHGW@, et que l'interface NET1 est systématiquement sélectionnée, indépendamment de la destination, confirmant ainsi la possibilité de perte de paquets pour la communication entre le client CEL et le client CER2 indiqué ci-dessus.

**Tableau 4 - Table de routage et essais de connectivité**

| |
|---|
| ``` # ip r CER1@ via NHGW@ dev net1 proto bgp CER2@ via NHGW@ dev net1 proto bgp NH/X dev net1 proto kernel scope link NH/X dev net2 proto kernel scope link # ping IP1@ -I LO@ PING CER1@ from CEL@: 56 data bytes 64 bytes from IP1@: seq=0 ttl=64 time=4.511 ms 64 bytes from IP1@: seq=1 ttl=64 time=0.615 ms ^C --- IP1@ ping statistics --- 2 packets transmitted, 2 packets received, 0% packet loss round-trip min/avg/max = 0.615/2.563/4.511 ms # ping IP2@ -I LO@ PING CER2@ from CEL@: 56 data bytes ^C --- 1.1.1.7 ping statistics --- 3 packets transmitted, 0 packets received, 100% packet loss ``` |

On constate ainsi que dans le cas de CER1@, l'interface NET1 est effectivement la bonne : le paquet ICMP atteint CER1, qui répond, validant le chemin via VPN1. En revanche, dans le cas de CER2@, l'utilisation de NET1 est incorrecte : le paquet est aiguillé de façon erronée vers VPN1 au lieu de VPN2, où CER2 n'est pas joignable, ce qui entraîne une perte de 100 % des paquets pour la communication entre le client CEL et le client CER2.

Ce comportement met en évidence les insuffisances de l'état de la technique et la nécessité d'une coordination plus fine entre la plage d'adresses IP de destination, le choix d'interface et le VPN cible, que la technique proposée dans les modes de réalisation décrits ci-après permettent précisément de mettre en œuvre.

La figure 4 reprend la topologie de la figure 1 dans un scénario où le client local CEL 106 est cette fois configuré selon un exemple de réalisation de la technique proposée. Ce scénario illustre un fonctionnement amélioré obtenu grâce à une configuration spécifique du client BGP.

Dans cette configuration, lorsque CER2 102 envoie un paquet IP via VPN2 104 vers CEL 106, le paquet traverse le proxy MPLS 108, et CEL répond via son interface NET2. Le paquet de réponse est alors transmis via le même chemin inverse, c'est-à-dire : proxy MPLS → DCGW → VPN2 → CER2. De manière symétrique, lorsqu'un paquet IP est reçu de CER1 via VPN1, CEL répond via NET1, assurant un aiguillage correct dans VPN1. Ce principe se généralise facilement à un CE local raccordé à plus de deux VPNs, ou à un scénario où plusieurs CE locaux communiquent entre eux à travers différents VPNs via un ou plusieurs proxys MPLS d'un même datacenter sans passer par la passerelle DCGW. Le mécanisme proposé permet ainsi un routage correct interface par interface, sans confusion entre les VPNs.

Le tableau 5 montre comment la technique proposée modifie la configuration de CEL pour éviter l'ambiguïté du routage observée précédemment et représentée dans le tableau 3. En particulier, une ligne de configuration supplémentaire est introduite dans les filtres d'importations. La directive set dev net1 ou set dev net2 permet d'associer explicitement l'interface à utiliser pour toutes les routes importées depuis un service donné (S1 ou S2). Par exemple, toutes les routes reçues via S2 sont automatiquement associées à l'interface NET2, garantissant un routage cohérent via VPN2. Ce type de configuration n'est pas proposé nativement par les routeurs classiques, ni par les logiciels open source comme Free Range Routing. Il s'agit donc d'une extension fonctionnelle non décrite dans les documents de l'état de la technique.

| |
|---|
| ``` route-map BGP_EXPORT-net1 permit 1 match interface lo set ip next-hop NH1@ exit ! route-map BGP_IMPORT-net1 permit 1 match source-protocol bgp set dev net1 exit ! route-map BGP_EXPORT-net2 permit 1 match interface lo set ip next-hop NH2@ exit ! route-map BGP_IMPORT-net2 permit 1 match source-protocol bgp set dev net2 exit ! ``` |

Tableau 5 - Filtres d'import-export avec association d'interface

Le tableau 6 montre l'effet de cette modification sur la table de routage de CEL et sur les tests de connectivité. Les routes vers CER1@ et CER2@ sont toujours associées à l'adresse de prochain saut NHGW@ de DCGW. Mais, cette fois, la route vers CER2@ est associée à l'interface NET2, conformément à la ligne set dev net2. Ainsi, chaque VPN est associé à la bonne interface physique, et le routage est cohérent.

**Tableau 6 - Table de routage améliorée et ping réussi**

| |
|---|
| ``` # ip r CER1@ via NHGW@ dev net1 proto bgp CER2@ via NHGW@ dev net2 proto bgp NH/X dev net1 proto kernel scope link NH/X dev net2 proto kernel scope link # ping IP1@ -I LO@ PING CER1@ from CEL@: 56 data bytes 64 bytes from IP1@: seq=0 ttl=64 time=4.511 ms 64 bytes from IP1@: seq=1 ttl=64 time=0.615 ms ^C --- IP1@ ping statistics --- 2 packets transmitted, 2 packets received, 0% packet loss round-trip min/avg/max = 0.615/2.563/4.511 ms # ping IP2@ -I LO@ PING CER2@ from CEL@: 56 data bytes 64 bytes from 1.1.1.7: seq=0 ttl=64 time=1.690 ms 64 bytes from 1.1.1.7: seq=1 ttl=64 time=0.320 ms ^C --- 1.1.1.7 ping statistics --- 2 packets transmitted, 2 packets received, 0% packet loss round-trip min/avg/max = 0.320/1.005/1.690 ms ``` |

Grâce à cette configuration, lorsque CEL envoie un paquet ICMPv4 vers l'adresse CER2@, le paquet emprunte le bon VPN (VPN2) via l'interface TID2 raccordée à NET2, et la réponse de CER2 est reçue correctement, confirmant que le chemin retour est également fonctionnel.

Les figures 5 (IPv4) et 6 (IPv6) illustrent, sous forme de diagrammes de séquence, le comportement du système lorsque la technique proposée est mise en œuvre, en comparaison des figures 2 et 3, qui décrivent un fonctionnement sans cette technique.

Chaque message représenté dans ces nouvelles figures est le pendant, d'un message numéroté précédemment :
le message 11 correspond à l'annonce de route descendante 1 des figures 2 et 3,
le message 12a correspond à la requête ARP (IPv4) 2a de la figure 2, et
le message 13 correspond au paquet IP 3 (émis par CEL vers CER2) des figures 2 et 3.

Les figures 5 et 6 permettent de visualiser à quel moment précis le choix de l'interface correcte (NET2) est imposé, et comment cela garantit un acheminement correct dans les deux directions du trafic.

Le message 11 représente l'annonce de route BGP descendante reçue par le client CEL, en provenance du service BGP S2, via le réflecteur de routes MP-RR.
Dans la configuration classique (cf. figures 2 et 3), le traitement de cette annonce s'effectue indépendamment de l'interface de réception, et le choix de l'interface utilisée en réponse (dans le sens montant) repose sur la résolution de l'adresse de prochain saut NHGW@, ce qui conduit à une sélection potentiellement incorrecte (ex. NET1 au lieu de NET2).

Dans la configuration proposée (cf. figures 5 et 6), la nouvelle directive de configuration set dev net2 dans la règle d'importation de routes force le client CEL à associer l'interface NET2 à toutes les routes apprises via la session BGP établie avec S2.
Ainsi, le choix de l'interface est réalisé dès le traitement du message 11, sur la base de la session BGP (et donc du VPN concerné), et non plus sur la seule base de l'adresse de prochain saut.

Dans la figure 5, le message 12a représente l'émission par CEL d'une requête ARP dans le cas IPv4 via l'interface NET2. Cette requête ARP est remplacée par l'émission d'un message ND dans le cas IPv6. Dans les figures 5 et 6, le message 13 correspond à l'émission du paquet IP à destination de CER2@, toujours via NET2.

On observe que le même chemin est emprunté dans les deux directions. Dans le sens descendant, les paquets reçus de CER2 passent par VPN2 → DCGW → proxy MPLS → TID2→ NET2, et dans le sens montant, les paquets envoyés par CEL empruntent également NET2 → TID2→ proxy MPLS → DCGW → VPN2 → CER2.

Le proxy MPLS, recevant les paquets IP via TID2, leur associe alors le bon label MPLS (MPLS-2), correspondant à VPN2. La passerelle DCGW, qui reçoit ces paquets avec le bon label, les relaye correctement vers VPN2, via l'association entre le label MPLS-2 et VPN2, assurant l'acheminement des paquets jusqu'au client CER2.

Cette cohérence entre sens montant et descendant est rendue possible par la sélection anticipée et contrôlée de l'interface NET2 raccordée à TID2 dès l'annonce de route, non pas en fonction de l'adresse de prochain saut NHGW@ comme dans les figures 2 et 3, mais en fonction de la session BGP et du service avec lequel elle a été établie.

Les tableaux 7 et 8 sont des exemples possibles de captures d'interfaces de commande réalisées sur une plateforme de test implémentant le proxy MPLS dans un switch OVS (OpenVSwitch), un réflecteur de routes à deux étages et trois clients CE locaux échangeant des paquets IP à travers deux VPNs.

**Tableau 7**

| |
|---|
| ``` client-203-deployment-68dbdcbd7b-trf27:/# ip r default via 169.254.1.1 dev eth0 1.1.1.5 nhid 30 via 192.168.207.5 dev net1 proto bgp metric 20 1.1.1.7 nhid 28 via 192.168.207.7 dev net1 proto bgp metric 20 10.233.1.212 dev eth0 scope link 10.233.1.213 dev eth0 scope link 169.254.1.1 dev eth0 scope link 192.168.207.0/26 dev net1 proto kernel scope link src 192.168.207.8 192.168.207.0/26 dev net2 proto kernel scope link src 192.168.207.10 client-203-deployment-68dbdcbd7b-trf27:/# ping 1.1.1.5 -I 1.1.1.8 PING 1.1.1.5 (1.1.1.5) from 1.1.1.8: 56 data bytes 64 bytes from 1.1.1.5: seq=0 ttl=64 time=4.511 ms 64 bytes from 1.1.1.5: seq=1 ttl=64 time=0.615 ms ^C --- 1.1.1.5 ping statistics --- 2 packets transmitted, 2 packets received, 0% packet loss round-trip min/avg/max = 0.615/2.563/4.511 ms client-203-deployment-68dbdcbd7b-trf27:/# ping 1.1.1.7 -I 1.1.1.8 PING 1.1.1.7 (1.1.1.7) from 1.1.1.8: 56 data bytes ^C --- 1.1.1.7 ping statistics --- 3 packets transmitted, 0 packets received, 100% packet loss ``` |

**Tableau 8**

| |
|---|
| ``` client-203-deployment-68dbdcbd7b-trf27:/# ip r default via 169.254.1.1 dev eth0 1.1.1.5 nhid 30 via 192.168.207.5 dev net1 proto bgp metric 20 1.1.1.7 nhid 28 via 192.168.207.7 dev net2 proto bgp metric 20 10.233.1.212 dev eth0 scope link 10.233.1.213 dev eth0 scope link 169.254.1.1 dev eth0 scope link 192.168.207.0/26 dev net1 proto kernel scope link src 192.168.207.8 192.168.207.0/26 dev net2 proto kernel scope link src 192.168.207.10 192.168.207.7 dev net2 scope link client-203-deployment-68dbdcbd7b-trf27:/# ping 1.1.1.5 -I 1.1.1.8 PING 1.1.1.5 (1.1.1.5) from 1.1.1.8: 56 data bytes 64 bytes from 1.1.1.5: seq=0 ttl=64 time=4.511 ms 64 bytes from 1.1.1.5: seq=1 ttl=64 time=0.615 ms ^C --- 1.1.1.5 ping statistics --- 2 packets transmitted, 2 packets received, 0% packet loss round-trip min/avg/max = 0.615/2.563/4.511 ms client-203-deployment-68dbdcbd7b-trf27:/# ping 1.1.1.7 -I 1.1.1.8 PING 1.1.1.7 (1.1.1.7) from 1.1.1.8: 56 data bytes 64 bytes from 1.1.1.7: seq=0 ttl=64 time=1.690 ms 64 bytes from 1.1.1.7: seq=1 ttl=64 time=0.320 ms ^C --- 1.1.1.7 ping statistics --- 2 packets transmitted, 2 packets received, 0% packet loss round-trip min/avg/max = 0.320/1.005/1.690 ms ``` |

Dans le tableau 8, une règle de routage statique « 192.168.207.7 dev net2 scope link » a été ajoutée à titre d'exemple pour suggérer l'interface de sortie à utiliser pour l'une des adresses de prochain saut NHX@ apprise sur l'un des services. On voit que la table de routage prend en compte cette information et que les paquets IP peuvent bien être échangés entre deux CEL. Cependant, cette méthode ne peut pas être déployée pour un grand nombre de dispositifs clients et elle peut engendrer des erreurs de configuration. De plus, elle n'est pas utilisable pour la passerelle de routage DCGW car il n'y a qu'une seule adresse de prochain saut NHGW@.

La figure 7 illustre une architecture matérielle générique d'un dispositif informatique 20, convenant pour la mise en œuvre de l'un ou l'autre des rôles décrits dans le présent document, à savoir une entité de routage telle que le client CEL ou un dispositif proxy chargé d'acheminer des messages à travers un réseau local virtuel. Cette architecture peut également s'appliquer à d'autres entités logicielles participant à l'acheminement des messages ou à la gestion des VPNs dans un datacenter ou dans tout autre environnement de réseaux virtuels. Le client CEL est une entité de routage pouvant s'interfacer avec un proxy tel qu'un proxy MPLS sur une interface WAN et pouvant connecter des terminaux sur une interface LAN. Il peut s'agir d'un routeur d'entreprise ou une passerelle résidentielle voire un terminal pouvant assurer une fonction de point d'accès mobile pour d'autres terminaux.

Le dispositif 20 comprend au moins :
un ou plusieurs processeurs 21 capables d'exécuter des instructions logicielles correspondant aux fonctions de routage, de traitement de paquets, ou de gestion de sessions BGP ;
une mémoire 22, volatile et/ou non volatile, destinée à stocker des données de configuration (telles qu'une table de routage, des règles d'import/export, ou des correspondances interface-VPN) ainsi que du code exécutable ; et
une ou plusieurs interfaces de communication 23, notamment des interfaces réseau, permettant l'échange de messages avec d'autres entités du système, et pouvant correspondre par exemple aux interfaces NET1, NET2 d'une entité de routage ou aux interfaces d'entrée d'un dispositif proxy.

## Revendications

1. Procédé de routage dans un environnement de réseaux privés virtuels, le procédé étant mis en œuvre par une entité de routage (106) comprenant une pluralité d'interfaces de sortie associées à un unique réseau local virtuel, le procédé comprenant :
une obtention d'un message comprenant une adresse de destination d'un dispositif distant (102), joignable, depuis une passerelle de routage (100), raccordée à une pluralité de réseaux privés virtuels et ayant une adresse d'acheminement dans le réseau local virtuel, par l'intermédiaire d'un réseau privé virtuel (104) de la pluralité de réseaux privés virtuels, et
un acheminement du message vers une interface de sortie de l'entité de routage, ladite interface de sortie étant adaptée pour un acheminement du message à destination de l'adresse de destination par l'intermédiaire dudit réseau privé virtuel (104) depuis la passerelle de routage.

2. Procédé selon la revendication 1, dans lequel l'interface de sortie est indiquée dans une table de routage accessible à l'entité de routage, comme interface de sortie à utiliser pour une plage d'adresses comprenant l'adresse de destination, au moins une partie de ladite plage d'adresses étant préalablement apprise par l'entité de routage au moyen d'une session de routage établie entre l'entité de routage et un gestionnaire d'une route associée audit réseau privé virtuel.

3. Procédé selon la revendication 2, dans lequel la session de routage est une session BGP.

4. Procédé selon la revendication 2 ou 3, dans lequel au moins une partie de la table de routage est stockée localement dans l'entité de routage.

5. Procédé selon l'une des revendications 2 à 4, dans lequel au moins une partie de la table de routage est stockée dans un dispositif distant et est interrogée par l'entité de routage avant l'acheminement du message vers ladite interface de sortie.

6. Procédé selon l'une des revendications 1 à 5, dans lequel l'adresse d'acheminement dans le réseau local virtuel est commune aux interfaces de sortie de l'entité de routage et correspond à l'adresse d'acheminement de la passerelle de routage (100) dans le réseau local virtuel.

7. Procédé selon l'une des revendications 1 à 6, dans lequel ladite interface de sortie de l'entité de routage est raccordée à une interface d'entrée d'un dispositif proxy, le message étant acheminé par le dispositif proxy vers l'adresse d'acheminement de la passerelle de routage (100) dans le réseau local virtuel au moyen d'un label spécifique audit réseau privé virtuel.

8. Procédé selon la revendication 7, dans lequel le label est déterminé par le dispositif proxy en tenant compte de l'interface d'entrée du dispositif proxy par lequel le dispositif proxy reçoit le message.

9. Entité de routage (106) adaptée pour opérer dans un environnement de réseaux privés virtuels, l'entité de routage comprenant une pluralité d'interfaces de sortie associées à un unique réseau local virtuel, l'entité de routage étant configurée pour :
obtenir un message comprenant une adresse de destination d'un dispositif distant (102), joignable, depuis une passerelle de routage(100), raccordée à une pluralité de réseaux privés virtuels et ayant une adresse d'acheminement dans le réseau local virtuel, par l'intermédiaire d'un réseau privé virtuel (104) de la pluralité de réseaux privés virtuels, et
acheminer le message vers une interface de sortie de l'entité de routage, ladite interface de sortie étant adaptée pour un acheminement du message à destination de l'adresse de destination par l'intermédiaire dudit réseau privé virtuel (104) depuis la passerelle de routage.

10. Programme d'ordinateur comportant des instructions pour la mise en œuvre d'un procédé selon l'une quelconque des revendications 1 à 8 lorsque ce programme est exécuté par un processeur.

11. Support d'enregistrement lisible par une entité de routage sur lequel est enregistré le programme selon la revendication 10.
